# FASCICULE DE BREVET EUROPEEN

(11) **EP 0 870 942 B1**
(45) Date de publication et mention de la délivrance du brevet: **12.06.2002**
(21) Numéro de dépôt: 98400719.5
(22) Date de dépôt: 26.03.1998
(51) Int. Cl.: F16D 23/14

(54) **Butée de débrayage avec plaque anti-usure**
Kupplungsausrücklager mit einer Anti-Verschleiss-Platte
Clutch release bearing with a anti-wear plate

(30) Priorité: 08.04.1997 FR 9704297
(43) Date de publication de la demande: 14.10.1998
(73) Titulaire: SKF FRANCE, F-92142 Clamart Cédex (FR)
(72) Inventeur: Arnault, Benoît, 37100 Tours (FR); Houdayer, Christophe, 37000 Tours (FR)
(74) Mandataire: Casalonga, Axel

(56) Documents cités:
- EP-A- 0 218 091
- EP-A- 0 247 400
- FR-A- 2 334 880
- FR-A- 2 389 799
- FR-A- 2 459 406
- FR-A- 2 600 386
- FR-A- 2 613 794

## Description

La présente invention concerne le domaine des butées de débrayage, notamment pour véhicules automobiles, du genre comprenant un élément de manoeuvre mobile en translation sur un tube guide sous l'action d'un organe de commande tel qu'une fourchette de débrayage, un roulement de butée destiné à agir sur le dispositif débrayeur d'un embrayage, tel qu'un diaphragme par l'intermédiaire de sa bague tournante, le roulement de butée venant en appui axial sur une face radiale de l'élément de manoeuvre par l'intermédiaire de sa bague fixe.

L'élément de manoeuvre peut comprendre une partie tubulaire prévue pour le coulissement sur le tube guide, et une collerette radiale servant d'un côté de surface d'appui radiale au roulement de butée et de l'autre côté de surface d'appui radiale pour l'organe de commande, par exemple pour les doigts de fourchette.

L'élément de manoeuvre étant réalisé fréquemment en matière synthétique, par exemple une matière plastique chargée de fibres de verre, on peut disposer sur la face arrière de la collerette radiale une plaque d'usure réalisée en tôle durcie par traitement thermique. Cette plaque permet de limiter l'usure de l'élément de manoeuvre au niveau de l'appui des doigts de fourchette, ces derniers venant porter sur la plaque d'usure au lieu de porter directement sur la collerette.

On connaît une butée de débrayage dont l'élément de manoeuvre comporte une plaque d'usure, par exemple par le document FR-A-2 001 617 (SKF). Cette butée comprend un corps de manchon et une- douille métallique. Une partie de la fabrication de la douille en tôle est réalisée avant l'opération de surmoulage. Puis le corps de manchon est surmoulé sur la douille. Enfin, le repliage du bord libre de la douille est effectué en dernier. Le processus de fabrication et d'assemblage est donc relativement compliqué car il nécessite une grand nombre d'opérations et implique des coûts supplémentaires quant aux manutentions, transports et gestion des stocks.

On connaît également par le document FR-A-2 459 906 (SKF), une butée de débrayage comportant une plaque d'usure disposée sur la face arrière d'une surface radiale de l'élément de manoeuvre. La plaque d'usure participe également à la retenue axiale du roulement sur l'élément de manoeuvre, ce qui assure le maintien de la plaque en contact avec la surface radiale de l'élément de manoeuvre qu'elle protège. Une telle plaque d'usure est de forme relativement complexe et est spécifique à un type de roulement de butée, ce qui empêche la standardisation des pièces et l'automatisation de l'assemblage.

Le document FR-A-2 389 799 (FERODO) propose de solidariser la plaque d'usure avec un élément de manoeuvre par encliquetage axial de ladite plaque sur des saillies élastiquement déformables issues d'une surface radiale de l'élément de manoeuvre. Ce type de fixation impose que l'élément de manoeuvre soit réalisé en une matière synthétique, ce qui interdit l'utilisation d'élément de manoeuvre réalisé en un autre matériau, par exemple en alliage léger. Par ailleurs, l'expérience a permis de montrer qu'il existe des risques de rupture des organes élastiques lors de l'encliquetage de la plaque d'usure, la matière synthétique utilisée pour la réalisation de l'élément de manoeuvre étant en général chargée de fibres de verre et, de ce fait, rendue plus cassante. Ce type de dispositif impose l'utilisation de plaques d'usure relativement épaisses d'où un coût matière et un poids plus élevés.

La présente invention a pour objet de remédier aux inconvénients des dispositifs ci-dessus et de proposer un dispositif de butée de débrayage dont la plaque anti-usure soit réalisée en tôle mince, de forme simple, facile à obtenir par découpe et emboutissage, et comportant les moyens nécessaires à sa fixation aisée sur l'élément de manoeuvre, quelle que soit la matière utilisée pour la réalisation de ce dernier.

Le dispositif de butée de débrayage, selon l'invention, est du type comprenant un palier à roulement monté sur un élément de manoeuvre muni d'une partie tubulaire et d'une collerette radiale sur une face de laquelle vient en appui un organe de commande pourvu de doigts de contact. La collerette est pourvue d'une plaque anti-usure en forme de disque plan, disposée sur ladite face et réalisée en tôle mince. La plaque anti-usure comprend des moyens d'accrochage sur l'élément de manoeuvre, capables de retenir axialement ladite plaque anti-usure directement par rapport à l'élément de manoeuvre.

Avantageusement, les moyens d'accrochage sont issus directement du disque plan.

Dans un mode de réalisation de l'invention, la plaque anti-usure comprend des languettes d'accrochage élastiquement déformables, pourvues d'extrémités capables de venir coopérer avec une partie de l'élément de manoeuvre formant une zone d'accrochage.

Les languettes d'accrochage peuvent être disposées sur le bord intérieur du disque et être orientées radialement vers l'intérieur ou bien être disposées sur le bord extérieur du disque et être orientées radialement vers l'extérieur.

Dans un mode de réalisation de l'invention, la plaque anti-usure comprend une portion cylindrique en contact avec la portion tubulaire de l'élément de manoeuvre.

Dans un mode de réalisation de l'invention, les languettes d'accrochage sont orientées axialement à l'opposé de la collerette radiale. On peut prévoir des languettes d'accrochage inclinées par rapport au plan général de la plaque anti-usure.

Dans un mode de réalisation de l'invention, l'extrémité libre des languettes d'accrochage est en contact avec une surface axiale de l'élément de manoeuvre se raccordant à la collerette dudit élément de manoeuvre. La cote sur les extrémités des languettes est déterminée pour qu'il existe une légère interférence avec la surface axiale de l'élément de manoeuvre formant la zone d'accrochage avec laquelle les languettes coopèrent de façon que ces dernières puissent fléchir lors de l'emmanchement axial de la plaque anti-usure sur l'élément de manoeuvre et viennent s'arc-bouter sur la surface axiale si on veut séparer les deux pièces. La surface axiale de l'élément de manoeuvre peut être une portion parfaitement lisse dans la mesure où les languettes élastiques sont autoblocantes. La surface axiale de l'élément de manoeuvre peut être cylindrique à section circulaire ou comporter des facettes planes.

Avantageusement, la surface axiale de l'élément de manoeuvre est pourvue de dégagements radiaux s'étendant de l'extrémité libre de la portion tubulaire jusqu'à proximité des languettes d'accrochage. On facilite ainsi le montage de la plaque anti-usure en limitant axialement la portée utile d'emmanchement au minimum nécessaire.

Dans un mode de réalisation de l'invention, l'extrémité libre des languettes d'accrochage est en contact avec une surface radiale formant butée de l'élément de manoeuvre.

Dans un autre mode de réalisation de l'invention, les languettes d'accrochage comprennent une portion axiale disposée autour de la périphérie de la collerette radiale ou dans des ouvertures axiales prévues dans la collerette radiale, et une portion repliée sur la portion axiale, l'extrémité libre desdites languettes d'accrochage venant en contact avec la face opposée de la collerette radiale.

Avantageusement, le dispositif comprend des moyens de retenue axiale de l'organe de commande, sous la forme de languettes supplémentaires comprenant une portion axiale disposée dans une rainure de la partie tubulaire et une portion radiale disposée à l'extrémité libre de la portion axiale et dirigée vers l'extérieur.

De préférence, la plaque anti-usure comprend un rebord axial de rigidification, ce qui permet d'utiliser une tôle très mince pour sa réalisation sans avoir à craindre de défauts de planéité excessifs.

La solidarisation angulaire entre la plaque anti-usure et l'élément de manoeuvre peut être assurée par concordance de forme entre ces deux pièces, par exemple dans une zone où l'élément de manoeuvre comprend des surfaces axiales de guidage, la plaque anti-usure pouvant être découpée pour former un bord rectiligne venant s'ajuster, éventuellement avec un certain jeu, contre lesdites surfaces axiales de guidage.

La butée de débrayage équipée d'une plaque anti-usure conforme à l'invention présente de nombreux avantages en raison de la simplicité de la fabrication de la plaque anti-usure, de la réduction du poids et de l'encombrement grâce à la faible épaisseur de la tôle utilisée, de la facilité de mise en place permettant une automatisation de l'opération, une simple poussée axiale étant suffisante, de la standardisation des éléments, la plaque anti-usure n'étant pas directement liée aux dimensions et à la forme du roulement utilisé et une même plaque anti-usure pouvant servir à des éléments de manoeuvre dont la partie arrière est identique et dont la partie avant est différente. La plaque anti-usure peut aussi bien convenir à un élément de manoeuvre en matière synthétique ou en métal léger.

L'invention sera mieux comprise à l'étude de la description détaillée de quelques modes de réalisation particuliers pris à titre d'exemples nullement limitatifs et illustrés par les dessins annexés, sur lesquels :
la figure 1 est une vue en deux parties, la partie supérieure étant en coupe axiale et la partie inférieure une vue de côté d'un dispositif de butée d'embrayage conforme à l'invention;
la figure 2 est une vue de derrière du dispositif de la figure 1;
la figure 3 est une vue en coupe axiale selon III-III de la figure 2;
la figure 4 est une vue en coupe axiale selon IV-IV de la figure 2;
la figure 5 montre une variante de la figure 2;
la figure 6 est une vue en coupe axiale selon VI-VI de la figure 5;
la figure 7 montre une variante de la figure 2;
la figure 8 est une vue en coupe axiale selon VIII-VIII de la figure 7;
la figure 9 montre une variante de la figure 2;
la figure 10 est une vue en coupe axiale selon X-X de la figure 9;
la figure 11 est une variante de la figure 2; et
les figures 12 à 14 sont des vues en coupe axiale selon XIV-XIV de la figure 11 montrant le montage de la plaque anti-usure sur l'élément de manoeuvre.

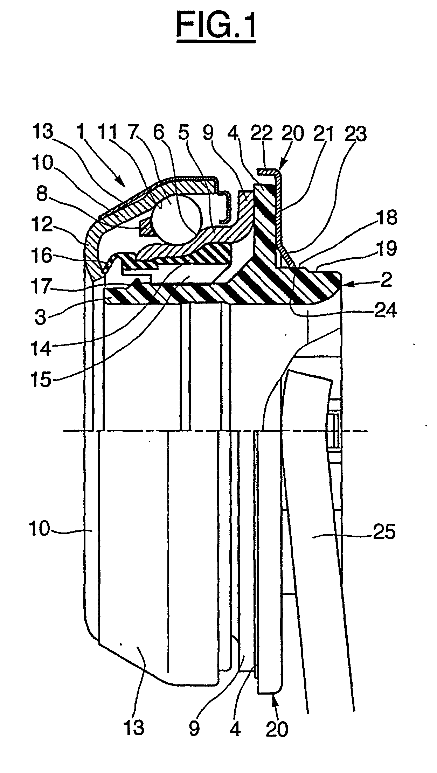

Telle qu'elle est illustrée sur les figures 1 à 4, la butée de débrayage conforme à l'invention comprend un palier à roulement 1 monté sur une douille de guidage 2, laquelle comporte une partie tubulaire 3 qui peut coulisser par rapport à un tube guide (non représenté sur la figure) et une collerette radiale 4. Le palier à roulement comporte une bague intérieure de roulement 5 à paroi mince réalisée par emboutissage d'une tôle ou d'un tube présentant un chemin de roulement torique 6 pour une rangée d'éléments roulants, par exemple des billes 7 maintenues dans une cage 8. La bague intérieure 5 comporte également une prolongation dirigée vers l'extérieur sous la forme d'une collerette radiale 9 qui vient en contact de frottement sur la surface frontale intérieure de la collerette radiale 4.

Le palier à roulement 1 se complète par une bague extérieure 10 également à paroi mince réalisée par emboutissage d'une tôle ou d'un tube qui présente un chemin de roulement torique 11 pour les billes 7 ainsi qu'une portion torique 12 qui vient en contact avec la surface du diaphragme d'un dispositif d'embrayage, non représenté sur la figure, lors du déplacement longitudinal de l'ensemble de la butée par rapport au tube guide sur lequel coulisse la douille de guidage 2. Le palier à roulement 1 est protégé par un flasque de protection 13 fixé sur la bague extérieure 10.

Un manchon en matière élastique 14, par exemple en élastomère ou en caoutchouc naturel, est disposé à l'intérieur de la bague interne 5 et présente une pluralité de nervures 15 parallèles à l'axe de la butée, dirigées vers l'intérieur et dont le bord libre interne entre en contact avec la surface extérieure de la partie tubulaire 3 de la douille de guidage 2, laquelle est réalisée en matière synthétique rigide, par exemple en matière synthétique additionnée de fibres de verre ou analogue. Le manchon élastique 14 présente une lèvre annulaire 16 qui assure l'étanchéité du palier à roulement 1 en entrant en contact avec la bague extérieure 10. Un bourrelet annulaire 17 disposé à l'extrémité de la partie tubulaire 3 assure la retenue axiale du palier 1 sur la douille de guidage 2.

Le manchon élastique 14 assure donc la liaison entre le roulement 1 et la douille de guidage 2, tout en autorisant l'autoalignement du roulement 1 sur le diaphragme par déplacement radial dudit roulement 1 par rapport à la douille de guidage 2 et déformation des nervures 15.

La portion tubulaire 3 s'étend des deux côtés de la collerette radiale 4 et est pourvue, du côté opposé au palier à roulement 1, d'une surface cylindrique extérieure 18 qui comporte, vers son extrémité libre située du côté de la collerette opposé au roulement, un certain nombre de dégagements radiaux 19. La douille de guidage 2 comprend une plaque 20 réalisée en tôle mince, et pourvue d'un disque radial 21 en contact avec la surface frontale de la collerette radiale 4 opposée au palier à roulement 1. Le grand diamètre du disque 21 se prolonge par un rebord cylindrique 22 de rigidification entourant la collerette radiale 4. L'alésage du disque 21 est découpé en une pluralité de languettes 23 obliques dirigées radialement vers l'intérieur et axialement à l'opposé de la collerette 4. L'extrémité libre 24 des languettes 23 est en contact d'accrochage avec la surface cylindrique 18 de la partie tubulaire 3. La plaque anti-usure 20 qui a de préférence subi un traitement de durcissement superficiel, sert de surface de contact pour un organe de manoeuvre 25 et qui exerce un effort en direction axiale pour provoquer le déplacement de la butée dans son ensemble lors d'une opération de débrayage.

La plaque anti-usure 20 peut être montée sur la douille de guidage 2 par un simple mouvement axial en direction de la collerette radiale 4. Les languettes 23 sont prévues de longueur et d'inclinaison telles que leur diamètre à l'état libre soit inférieur au diamètre de la surface cylindrique 18 avec laquelle elles viennent interférer et très légèrement supérieur à celui du fond des dégagements 19. La pénétration initiale de la plaque anti-usure 20 sur la douille de guidage 2 s'effectue ainsi sans effort et sans endommagement de la surface cylindrique 18 grâce aux dégagements 19. Puis les languettes sont écartées vers l'extérieur lors de leur passage sur la surface cylindrique 18 et empêchent tout mouvement de démontage de la plaque anti-usure 20 par effet d'arc-boutement.

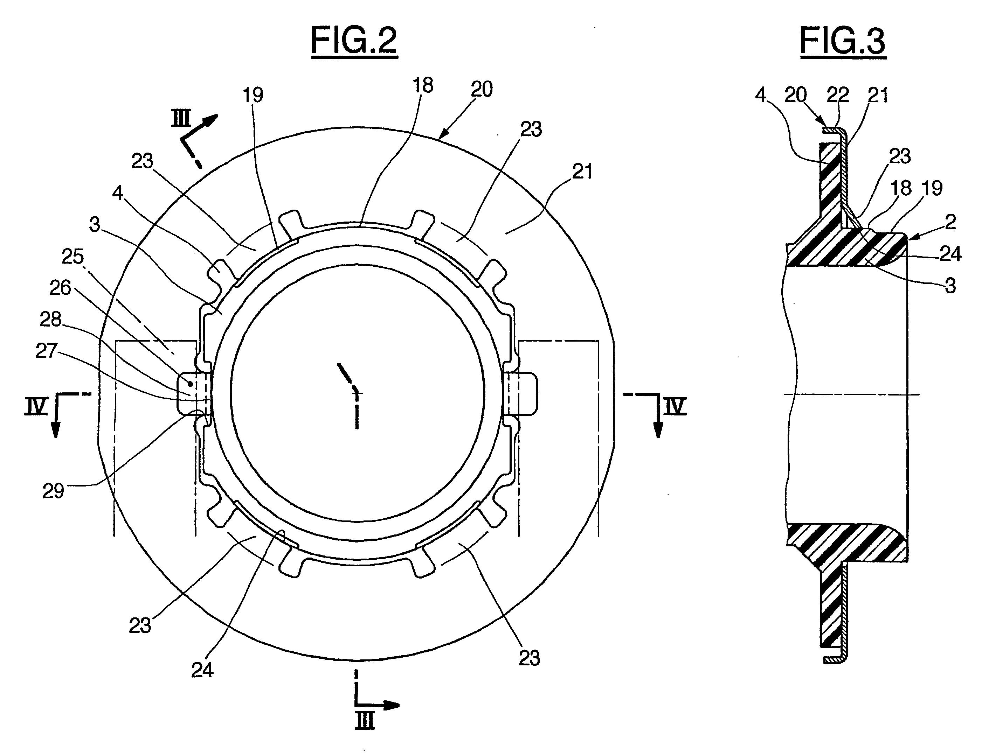

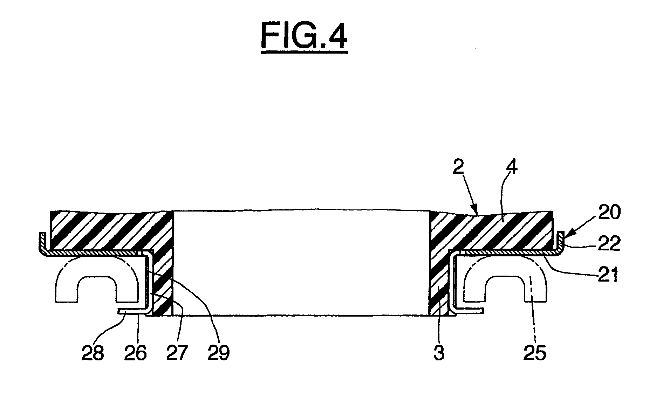

Comme on le voit plus particulièrement sur les figures 2 et 4, la plaque anti-usure 20 comprend également sur son extrémité de petit diamètre, deux languettes supplémentaires 26 diamétralement opposées, comprenant une portion axiale cylindrique 27 et une portion radiale 28 disposée à l'extrémité libre de la portion axiale 27 et dirigée vers l'extérieur. La portion axiale 27 est disposée dans une rainure 29 de la partie tubulaire 3 et est de longueur légèrement inférieure à cette dernière. Les deux languettes 26 forment des moyens de retenue axiale de l'organe de commande 25. Les portions axiales 27 logées dans les rainures 29 de la partie tubulaire 3 assurent la solidarisation circulaire de la plaque anti-usure 20 par rapport à la douille de guidage 2.

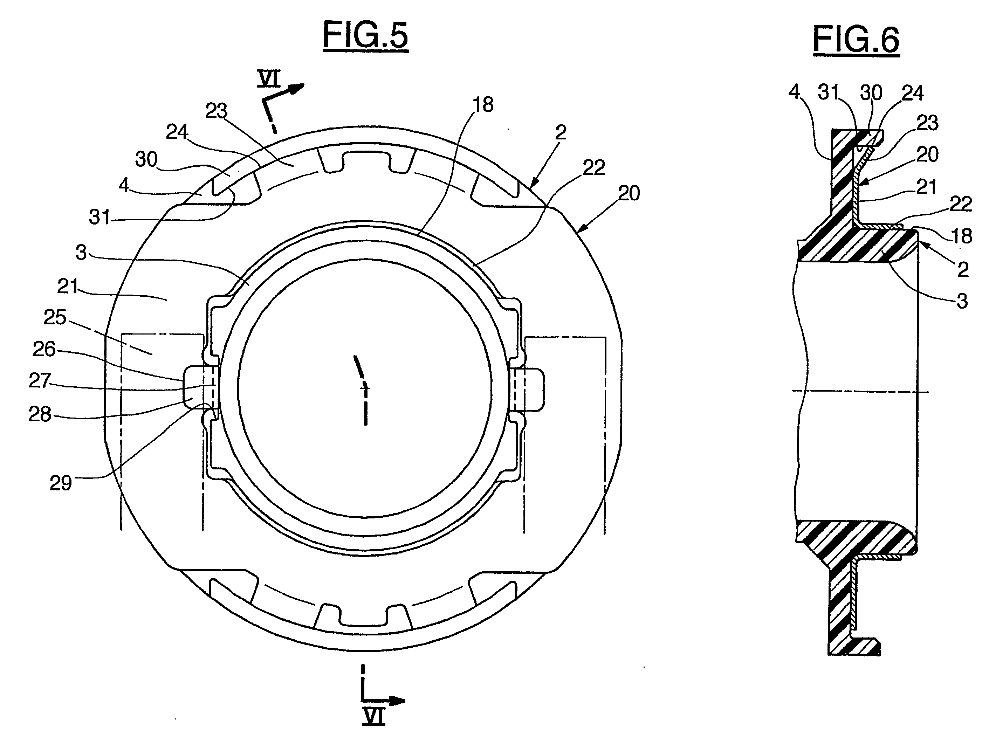

Sur les figures 5 et 6, les références des éléments semblables à ceux des figures précédentes ont été conservées. La collerette radiale 4 de la douille de guidage 2 est pourvue sur sa périphérie d'une portion cylindrique 30 pourvue d'un alésage 31 et s'étendant à l'opposé du roulement 1. La portion cylindrique 30 s'étend autour de la collerette radiale 4 en deux secteurs diamétralement opposés.

La plaque anti-usure 20 comprend des languettes 23 disposées sur le bord extérieur du disque 21 et prévues pour entrer en contact d'accrochage avec l'alésage 31. Un rebord cylindrique 22 de rigidification est prévu sur le bord intérieur du disque 21 et s'étend axialement à l'opposé de la collerette 4. Le rebord cylindrique 22 est en contact avec la surface cylindrique extérieure 18 de la partie tubulaire 3.

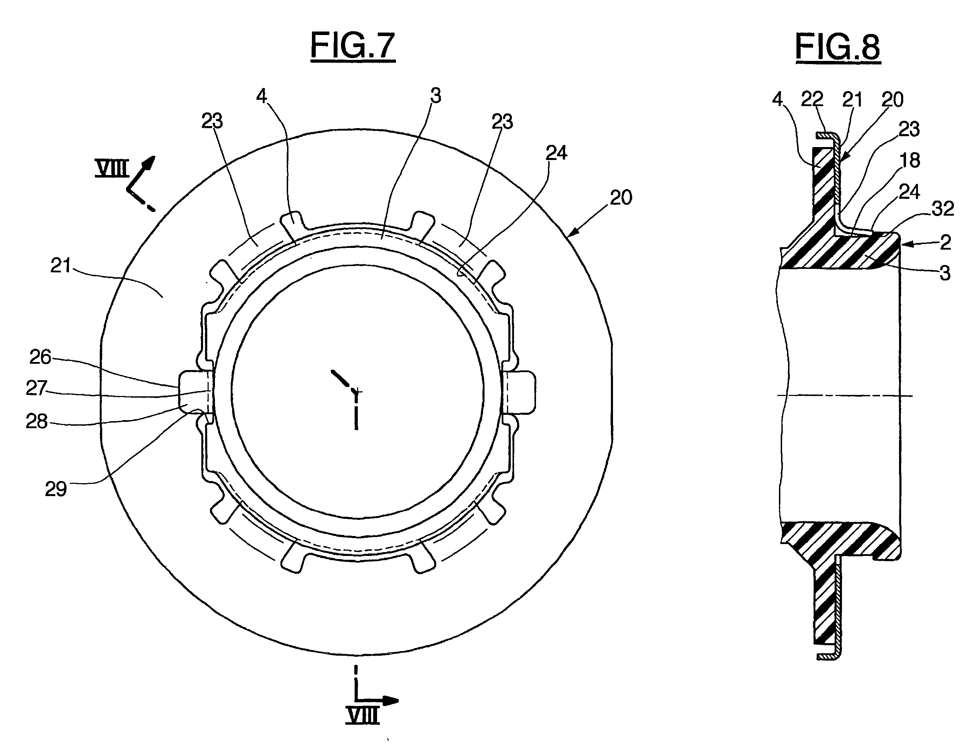

La butée de débrayage illustrée sur les figures 7 et 8 est semblable à celle des figures 1 à 4 à ceci près que les languettes 23 sont inclinées très fortement par rapport au plan du disque radial 21, par exemple de l'ordre de 75°. Pour accroître la souplesse des languettes 23, leur découpe se prolonge partiellement dans le disque radial 21. La partie tubulaire 3 de la douille de guidage 2 est pourvue d'une surface cylindrique 18 avec laquelle les languettes 23 viennent en contact et d'un redan 32 formant une surface radiale de butée avec lequel l'extrémité libre 24 des languettes 23 vient en butée. Au montage, on pousse axialement la plaque anti-usure 20 en direction de la collerette radiale 4. Les languettes 23 entrent en contact avec l'extrémité libre de la partie radiale 3 qui comprend le redan 32 et s'écartent vers l'extérieur puis viennent en contact avec la surface cylindrique 18 après le passage du redan 32. On garantit ainsi l'indémontabilité de la plaque anti-usure 20 par rapport à la douille de guidage 2 par un verrouillage axial positif.

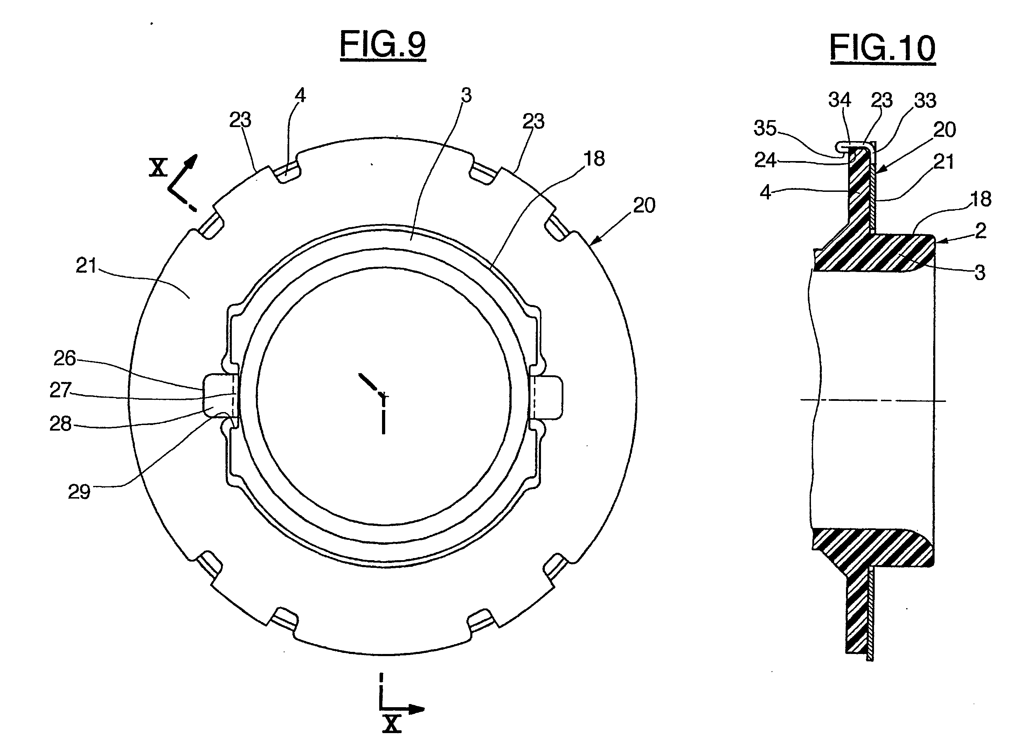

Le mode de réalisation des figures 9 et 10 est semblable à celui des figures 1 à 4, à ceci près que la plaque anti-usure 20 comprend des languettes 23 disposées sur son bord extérieur et comprenant une portion radiale 33 prévue dans le prolongement du disque plan 21, une portion cylindrique 34 s'étendant à partir de l'extrémité libre de la portion radiale 33 autour de la collerette radiale 4 et en saillie axialement au-delà de ladite collerette 4, et une portion repliée 35 à l'intérieur de la portion cylindrique 34. L'extrémité libre 24 des languettes 23 ainsi constituées est en butée contre la surface radiale de la collerette 4 sur laquelle vient s'appuyer le palier à roulement 1 (figure 1). Lors du montage, la portion repliée 35 des languettes 23 s'écarte au passage de la collerette 4 puis reprend sa forme initiale. La plaque anti-usure 20 est ainsi prémunie contre un éventuel mouvement dans le sens du démontage.

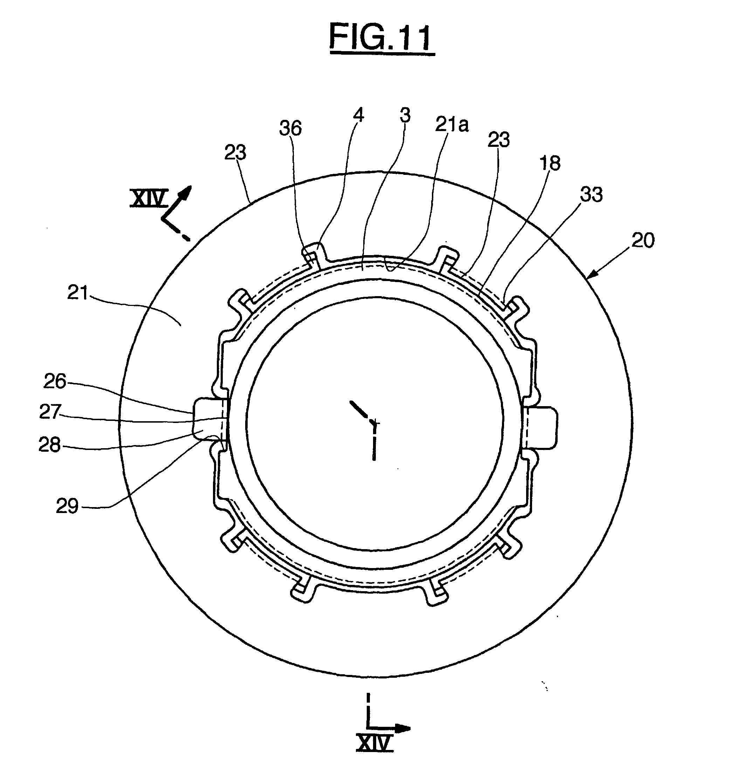

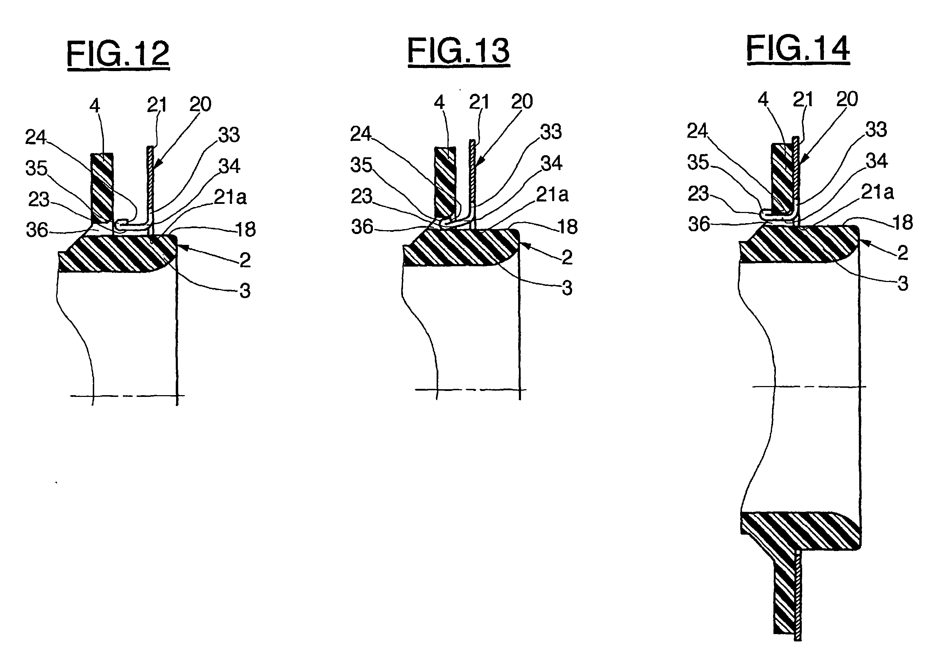

Le mode de réalisation illustré sur les figures 11 à 14 est semblable à celui des figures 9 et 10, à ceci près que les languettes 23 sont prévues à proximité du bord interne 21a du disque plan 21 de la plaque anti-usure 20. Quatre ouvertures axiales 36 traversant la collerette 4 à proximité de la surface cylindrique 18, sont prévues pour laisser passer les quatre languettes 23. Lors du montage, on amène la plaque anti-usure 20 sur la surface cylindrique 18, le bord intérieur 21a du disque 21 servant à centrer la plaque anti-usure 20. Puis on pousse axialement ladite plaque anti-usure 20 vers la collerette radiale 4, la portion 35 qui est repliée à l'extérieur de la portion cylindrique 34 des languettes 23 entre en contact avec le bord de l'ouverture 36, ce qui provoque le fléchissement des languettes 23 radialement vers l'intérieur et leur passage dans les ouvertures 36. Les languettes 23 viennent en saillie sur le côté opposé de la collerette 4, puis s'encliquettent, l'extrémité libre 24 des languettes 23 venant en contact d'accrochage avec la surface radiale de la collerette 4 sur laquelle vient en appui le roulement 1 illustré sur la figure 1.

Bien entendu, ces modes de réalisation ne sont pas limitatifs.

C'est ainsi que la zone d'accrochage de la partie circulaire de l'organe de manoeuvre destinée à coopérer avec les languettes d'accrochage de la plaque anti-usure pourrait être constituée d'une surface axiale cylindrique comportant des facettes planes au lieu d'une surface axiale cylindrique de section circulaire.

Grâce à l'invention, on obtient une plaque anti-usure de faible poids, de faible encombrement, pouvant être obtenue par des opérations simples de découpe et d'emboutissage, de montage par un mouvement axial, et pouvant être standardisée pour des douilles de guidage de dimensions différentes et/ou de matériaux différents.

## Revendications

1. Dispositif de butée de débrayage du type comprenant un palier à roulement (1) monté sur un élément de manoeuvre (2) muni d'une partie tubulaire (3) et d'une collerette radiale (4) sur une face de laquelle vient en appui un organe de commande pourvu de doigts de contact (25), ladite collerette (4) étant pourvue d'une plaque anti-usure (20) en forme de disque plan disposé sur ladite face et réalisée en tôle mince, **caractérisé par le fait que** ladite plaque anti-usure (20) comprend des moyens d'accrochage sur l'élément de manoeuvre (2) capables de retenir axialement ladite plaque anti-usure (20) directement par rapport à l'élément de manoeuvre (2), sous la forme de languettes d'accrochage (23) élastiquement déformables, pourvues d'extrémités (24) capables de venir coopérer avec une partie de l'élément de manoeuvre (2) formant une zone d'accrochage.

2. Dispositif selon la revendication 1, **caractérisé par le fait que** lesdits moyens d'accrochage sont issus directement du disque plan.

3. Dispositif selon la revendication 1 ou 2, **caractérisé par le fait que** les languettes d'accrochage sont disposées sur le bord intérieur du disque et orientées radialement vers l'intérieur.

4. Dispositif selon la revendication 1 ou 2, **caractérisé par le fait que** les languettes d'accrochage sont disposées sur le bord extérieur du disque et orientées radialement vers l'extérieur.

5. Dispositif selon l'une quelconque des revendications précédentes, **caractérisé par le fait que** la plaque anti-usure comprend une portion cylindrique en contact avec la partie tubulaire de l'élément de manoeuvre.

6. Dispositif selon l'une quelconque des revendications précédentes, **caractérisé par le fait que** les languettes d'accrochage sont orientées axialement à l'opposé de la collerette radiale.

7. Dispositif selon l'une quelconque des revendications précédentes, **caractérisé par le fait que** l'extrémité libre (24) des languettes d'accrochage est en contact avec une surface axiale (18) de l'élément de manoeuvre se raccordant sur la collerette dudit élément de manoeuvre.

8. Dispositif selon la revendication 7, **caractérisé par le fait que** la surface axiale de l'élément de manoeuvre est pourvue de dégagements radiaux (19) s'étendant de l'extrémité libre de la portion tubulaire jusqu'à proximité des languettes d'accrochage.

9. Dispositif selon l'une quelconque des revendications 1 à 6, **caractérisé par le fait que** l'extrémité libre des languettes d'accrochage est en contact avec une surface radiale formant butée (32) de l'élément de manoeuvre.

10. Dispositif selon l'une quelconque des revendications 1 à 5, **caractérisé par le fait que** les languettes d'accrochage comprennent une portion axiale (34) disposée autour de la périphérie de la collerette radiale ou dans des ouvertures axiales (36) prévues dans la collerette radiale, et une portion repliée (35) sur la portion cylindrique, l'extrémité libre desdites languettes d'accrochage venant en contact avec la face opposée de la collerette radiale.

11. Dispositif selon l'une quelconque des revendications précédentes, **caractérisé par le fait qu'**il comprend des moyens de retenue axiale de l'organe de commande sous la forme de languettes supplémentaires (26) comprenant une portion axiale disposée dans une rainure (29) de la partie tubulaire et une portion radiale disposée à l'extrémité libre de la portion axiale et dirigée vers l'extérieur.

12. Dispositif selon l'une quelconque des revendications précédentes, **caractérisé par le fait que** la plaque anti-usure comprend un rebord axial de rigidification (22).

## Claims

1. Clutch-release bearing device of the type comprising a rolling bearing (1) mounted on an operating element (2) fitted with a tubular part (3) and with a radial flange (4) against one face of which there bears a control member provided with contact fingers (25) , the said flange (4) being provided with an anti-wear plate (20) in the form of a flat disc arranged on the said face and made of thin sheet metal, **characterized in that** the said anti-wear plate (20) comprises means of catching on the operating element which are capable of axially retaining the said anti-wear plate (20) directly with respect to the operating element (2), in the form of elastically deformable catching tabs (23) provided with ends (24) which are capable of interacting with a part of the operating element(2) forming a catching zone .

2. Device according to Claim 1, **characterized in that** the said catching means protrude directly from the flat disc.

3. Device according to Claim 1 or 2, **characterized in that** the catching tabs are arranged on the inner edge of the disc and face radially inwards.

4. Device according to Claim 1 or 2, **characterized in that** the catching tabs are arranged on the outer edge of the disc and face radially outwards.

5. Device according to any one of the preceding claims, **characterized in that** the anti-wear plate comprises a cylindrical portion in contact with the tubular part of the operating element.

6. Device according to any one of the preceding claims, **characterized in that** the catching tabs face axially away from the radial flange.

7. Device according to any one of the preceding claims, **characterized in that** the free ends (24) of the catching tabs are in contact with an axial surface (18) of the operating element connecting with the flange of the said operating element.

8. Device according to Claim 7, **characterized in that** the axial surface of the operating element is provided with radial cavities (19) extending from the free end of the tubular portion as far as close to the catching tabs.

9. Device according to any one of Claims 1 to 6, **characterized in that** the free ends of the catching tabs are in contact with a radial surface forming an abutment (32) of the operating element.

10. Device according to any one of Claims 1 to 5, **characterized in that** the catching tabs comprise an axial portion (34) arranged around the periphery of the radial flange or in axial openings (36) provided in the radial flange, and a portion (35) folded over onto the cylindrical portion, the free ends of the said catching tabs coming into contact with the opposite face of the radial flange.

11. Device according to any one of the preceding claims, **characterized in that** it comprises means of axially retaining the control member, in the form of additional tabs (26) comprising an axial portion arranged in a groove (29) of the tubular part and a radial portion arranged at the free end of the axial portion and pointing outwards.

12. Device according to any one of the preceding claims, **characterized in that** the anti-wear plate comprises an axial stiffening rim (22).

## Patentansprüche

1. Kupplungsausrücklagervorrichtung in der Bauart mit einem Wälzlager (1), das an einem Betätigungselement (2) angebracht ist, das mit einem rohrförmigen Abschnitt (3) und einem radialen Kragen (4) versehen ist, der auf einer seiner Flächen einen Anschlag für ein Ausrückelement bietet, das Ausrückfinger (25) aufweist, wobei der Kragen (4) mit einer Verschleißschutzscheibe (20) in Form einer ebenen Scheibe versehen ist, die auf der besagten Fläche angeordnet und aus dünnem Blech hergestellt ist, **dadurch gekennzeichnet, dass** die Verschleißschutzscheibe (20) zur unmittelbaren axialen Sicherung an dem Betätigungselement (2) Mittel zur Verankerung an dem Betätigungselement (2) in Gestalt von elastisch verformbaren Befestigungszungen (23) aufweist, die mit Enden (24) versehen sind, die geeignet sind, mit einem als Befestigungsbereich dienenden Abschnitt des Ausrückelements (2) zusammenzuwirken.

2. Vorrichtung nach Anspruch 1, **dadurch gekennzeichnet, dass** die Befestigungsmittel einstückig mit der ebenen Scheibe ausgebildet sind.

3. Vorrichtung nach Anspruch 1 oder 2, **dadurch gekennzeichnet, dass** die Befestigungszungen an dem Innenrand der Scheibe angeordnet und in radialer Richtung nach innen gerichtet sind.

4. Vorrichtung nach Anspruch 1 oder 2, **dadurch gekennzeichnet, dass** die Befestigungszungen an dem Außenrand der Scheibe angeordnet und radial nach außen gerichtet sind.

5. Vorrichtung nach einem der vorhergehenden Ansprüche, **dadurch gekennzeichnet, dass** die Verschleißschutzscheibe einen zylindrischen Abschnitt umfasst, der mit dem rohrförmigen Abschnitt des Ausrückelements in Berührung steht.

6. Vorrichtung nach einem der vorhergehenden Ansprüche, **dadurch gekennzeichnet, dass** die Befestigungszungen in axialer Richtung auf die gegenüberliegende Seite des radialen Kragens gerichtet sind.

7. Vorrichtung nach einem der vorhergehenden Ansprüche, **dadurch gekennzeichnet, dass** das freie Ende (24) der Befestigungszungen mit einer axialen Fläche (18) des Ausrückelements in Berührung steht, die sich an den Kragen des Ausrückelements anschließt.

8. Vorrichtung nach Anspruch 7, **dadurch gekennzeichnet, dass** die axiale Fläche des Ausrückelements mit radialen Ausnehmungen (19) versehen ist, die sich von dem freie Ende des rohrförmigen Abschnitts bis in die Nähe der Befestigungszungen erstrecken.

9. Vorrichtung nach einem der Ansprüche 1 bis 6, **dadurch gekennzeichnet, dass** das freie Ende der Befestigungszungen in Berührung mit einer Radialfläche steht, die ein Widerlager (32) des Ausrückelements bildet.

10. Vorrichtung nach einem der Ansprüche 1 bis 5, **dadurch gekennzeichnet, dass** die Befestigungszungen einen axialen Abschnitt (34), der um den Umfang des radialen Kragens oder in axialen Öffnungen (36) des Kragens angeordnet ist, und auf dem zylindrischen Abschnitt einen umgebogenen Abschnitt (35) aufweisen, wobei die freien Enden der Befestigungszungen in Berührung mit der gegenüberliegenden Fläche des radialen Kragens kommen.

11. Vorrichtung nach einem der vorhergehenden Ansprüche, **dadurch gekennzeichnet, dass** zu der Vorrichtung Mittel für die axiale Befestigung des Betätigungselements in Gestalt von zusätzlichen Zungen (26) gehören, die einen in einer Ringnut (29) des rohrförmigen Abschnitts angeordneten axialen Abschnitt und einen an dem freien Ende des axialen Abschnitts angeordneten und nach außen gerichteten radialen Abschnitt aufweisen.

12. Vorrichtung nach einem der vorhergehenden Ansprüche, **dadurch gekennzeichnet, dass** die Verschleißschutzscheibe zur Versteifung eine axiale Schulter (22) umfasst.
